# EUROPEAN PATENT APPLICATION

(11) **EP 4 530 008 A1**
(43) Date of publication of application: **02.04.2025**
(21) Application number: 23425053.8
(22) Date of filing: 27.09.2023
(51) Int. Cl.: B23K 11/11, B23K 11/25, B23K 11/31

(54) **WELDING CELL CONTROL METHOD**

(71) Applicant: Diakont S.r.l., 50025 Montespertoli (FI) (IT)
(72) Inventor: Fedosovskiy, Mikhail, 197720 St. Petersburg (RU); Uvarov, Mikhail, 194352 St. Petersburg (RU); Sedunov, Dmitrii, 194355 St. Petersburg (RU)
(74) Representative: Emmi, Mario

(57) **Abstract**

The present invention provides a welding cell control method, according to which forming a movement trajectory of a target point X of electrodes closure as extending between outer surfaces of the workpieces and through the welding spots, and forming a movement trajectory of centers of end surfaces of the electrodes between at least two consequent welding spots as a sum of a movement trajectory of the welding gun and a movement trajectory of the electrodes, wherein the movement trajectory of the welding gun tracks the movement trajectory of the target point X of electrodes closure. The technical effect achieved by implementing the present invention is an increase in productivity and energy efficiency of the welding cell while ensuring high welding quality.

## Description

### TECHNICAL FIELD

The present invention relates to resistance spot welding, in particular to methods for controlling robot-assisted welding cells.

### BACKGROUND OF THE INVENTION

A welding gun is intended for resistance spot welding. Resistance spot welding became commonly used in the industry. For example, resistance spot welding is used for connecting metal body parts in vehicle manufacturing.

Welding guns generally have a first movable electrode driven by an electrode actuator and a second electrode that remains stationary relative to the welding gun. Movable electrode actuators can be hydraulic, pneumatic or electromechanical (hereinafter referred to as EMA) actuators. The welding gun is located on an arm of an industrial manipulator (hereinafter, a robot) which is controlled by the controller of the robot. During configuration, a spatial coordinate of the end of the fixed electrode of the welding gun is determined, for example, by bringing the electrode to the plate without a gap between them and recording the current coordinate. Before welding, the robot is trained - with a control unit an operator brings the welding gun to the welding spot such that the second electrode touches one of the parts to be welded.

During welding, the robot moves the welding gun to two or more parts to be welded fixed in the equipment such that the second electrode of the welding gun touches one of the parts to be welded at a right angle to the surface of this part to be welded. Then, in response to a command from the control system, e.g., of the robot, the EMA brings the first electrode at a high speed, preferably a maximum speed, to the parts to be welded without touching them, and then the speed of movement of this electrode is reduced to a contact speed. It is important that the coordinate at which the electrode speed decreases to the contact speed is programmed in the robot. This coordinate is determined so that the electrode does not collide with the parts at a speed greater than the contact speed, so as not to damage the parts. It should be noted that the workpieces have a thickness tolerance, a location tolerance in the fixing tooling, can have a gap therebetween, and can also be bent. In order to avoid the electrode colliding with the parts, the distance between the electrode speed reduction coordinates and the contact of the electrode with the parts should be increased by the specified tolerances and/or the size of the gap and/or the size of the bend of the parts. After the movable electrode contacts one of the parts to be welded, the welding gun clamps the parts to be welded between the electrodes, and then electric current is passed through the electrodes, in particular, through caps on the ends thereof that contact the parts to be welded, and through the parts to be welded, which causes local heating, melts the metal in the clamped area and forms a weld nugget. It should be noted that the amount of force applied to the parts during welding affects the strength of the welding spot. A force that is too weak will lead to the molten metal from the center of the welding spot spilling between metal sheets to be welded and from underneath the electrodes, and consequently, the welding spot will be less robust. Conversely, applying force that is too high increases the contact area of the metal sheets and reduces resistance in the welding spot, which reduces the heating of the metal in the welding spot and reduces the welding spot nugget. The reduced nugget size results in lower weld strength. Thus, to ensure the strength of the weld, high accuracy of the force compressing the parts during welding is required. After the welding current is no longer supplied, the metal cools and hardens, the parts become joined at the weld nugget and the welding gun opens.

One or more robots with welding guns for welding vehicle parts are joined into a welding workcell. It is important that an increase in the capacity of a welding workcell is facilitated by a reduction of the welding cycle duration which is directly influenced by the speed of movement of the electrodes of a welding gun. The term "welding cycle" refers here to the time interval between the moment of beginning the transition from the previous welding spot to the current welding spot and the moment of beginning the transition from the current welding spot to the next welding spot. Given that one of the electrodes remains stationary relative to the welding gun, its speed is equal to the movement speed of the welding gun itself moved by the robot. Therefore, the movement speed of the stationary electrode is always limited by the movement speed of the robot having several movable arms with a large weight. The large weight of the arms causes significant inertia thereof, which does not allow the robot to accelerate to a high speed quickly and accurately unlike the EMA actuating the movable electrode of the welding gun. It should be noted that the acceleration that each robot arm develops, and, accordingly, the acceleration of the welding gun when moved, largely depends on the relative location of the robot arms (on its pose). One of the characteristics of the robot is its working area. The working area is a space in which the working body of a robot can be located during its operation. The working area is characterized by its shape and volume. The closer the position of the welding gun is to the boundaries of the robot's working area, the less acceleration the robot can provide to the welding gun, since the torque on the hinges of the arms and on the motors on said hinges driving the arms increases. Furthermore, the maximum acceleration that the robot can develop depends on the orientation of the robot axes and the nature of the movement that the robot needs to perform, e.g., the robot overcoming the force of gravity can move with lower acceleration compared to the movement aided by the force of gravity. Thus, the robot cannot provide high and uniform acceleration of the welding gun, and therefore of the fixed electrode, at any point in the working area and on the trajectory.

A method for controlling a welding gun is disclosed in KR100377678B1, proposing to reduce the duration of the welding cycle by optimizing the movement path of welding gun electrodes. This method proposes simultaneous movement of the robot and the welding gun electrodes in such a way that the final path does not contain straight lines for opening the electrodes, moving to the next welding point and closing the electrodes, but forms a smooth curve, which obviously reduces transition time to the next welding point and the start of welding. However, this method has the disadvantage of using a welding gun having only one movable electrode. Thus, the movement of the fixed electrode is performed by the robot, said movement being slow and energy-intensive due to the large weight of the robot arms and, as a result, the high inertia of the robot. In addition, as mentioned hereinabove, the acceleration that the robot can develop depends on its pose and, therefore, it is not possible to achieve the same high performance of the welding cell in any robot posture.

To solve the problem of low speed of the fixed electrode, it would be advantageous to make both electrodes of a welding gun movable.

The designs of welding guns with two electrodes can vary. The most common variations include:
- C-type welding guns. In the conventional design of this welding gun, the movable electrode moves translationally towards the second fixed electrode. As a rule, the electrodes are arranged coaxially, but variations of welding guns exist wherein the second electrode is arranged at an angle to the movable electrode; however, end surfaces thereof are formed by parallel planes to provide the required workpiece pressing area.
- X-type welding guns. In the design of these welding guns, the electrodes have a common axis of rotation around which electrode arms rotate, said axis being perpendicular to the plane in which the electrode axes are arranged. In a conventional design with a single movable electrode, the movable electrode rotates about the common axis of the electrodes along with the arm of the welding gun.

A welding gun design is disclosed in JP3319086B2, wherein each electrode (the first electrode and the second electrode) is driven by a separate EMA, which allows equalizing, that is, achieving equal forces on each electrode when the workpieces are compressed by the welding gun during welding. Equal forces ensure uniform pressing of the electrodes on both sides and uniform predicted resistance between the electrodes and each workpiece, allowing to obtain a high-quality welding spot, i.e., a welding spot of required strength. In this design, the EMA moves the second electrode, which obviously has a greater length and weight, which leads to an increase in acceleration time of said second electrode and, consequently, to an increase in the welding cycle duration. A weight increase of the arm leads to a weight increase of the welding gun, thus increasing their inertia, and this in turn leads to a decrease in acceleration, and therefore the speed that the robot to which the welding gun is secured can reach when moving between welding spots. In addition, according to the above prior art solution, the determination of contact between the electrodes and the workpiece surfaces is carried out based on data from position sensors on the actuators, which can lead to their deformation in the event of a critical deviation of workpiece position from the nominal value. Further, according to the prior art solution, in the proposed control method, it is proposed to perform contact using the first electrode, stop it, then perform contact using the second electrode, then stop it and gain force by means of simultaneous movement of the two electrodes. The beginning of movement of the electrodes after their complete stop requires excessive energy, and ensuring high acceleration requires actuator motors of a large size, leading either to an increase in welding gun weight, and, consequently, to higher inertia, low speed and high energy costs, or to a longer time required for the electrodes to gain force prior to welding, and leads to an increase in welding cycle duration as a consequence.

It should be noted that a point is determined on the welding gun which is aligned with the coordinate of the welding spot on the workpieces by bringing the welding gun close to the welding spot. For welding guns, said point is typically the end of the fixed electrode. When training the robot, the operator brings the welding gun close to the workpieces so that the fixed electrode touches the workpiece surfaces. Then, in the automatic cell operation mode, the robot moves the welding gun between the welding spots, the coordinates of which are determined at the robot training stage, aligning the point at the end of the electrode with the coordinates of each welding spot in turn. In the case of a welding gun with two movable electrodes, such a method of associating a point with the end of a fixed electrode cannot be realized in the absence of a fixed electrode. The ends of both electrodes can change their position relative to the welding gun. JP3319086B2 discloses a method for training a robot with a welding gun having two movable electrodes; however, it does not disclose exactly how the welding gun is associated with the coordinate system of the robot, and how the movement trajectory of such a welding gun is established. In other words, the prior art solution does not disclose setting the point on the welding gun which the robot combines with the coordinates of the welding spots when moving the welding gun between the welding spots. The movement trajectory providing the shortest path between welding spots for the welding gun is one of the factors necessary for achieving high welding cell performance.

To provide high-quality welding, it is necessary to ensure uniform pressing of the electrodes to the workpieces. This requires not only ensuring the required force of pressing the electrodes of the welding gun, but also a perpendicular arrangement between the electrodes and the workpieces. In particular, it is necessary to ensure that the normal line to the end surface of the electrode coincides with the normal line to the workpiece surfaces at the welding spot. US9144860B2 discloses a method wherein one electrode is led to contact the workpiece surfaces at a test point and at least at two other points located at a short distance from the test point, the coordinates wherein the electrode contacted the workpieces are determined for each point, the incline of the welding gun is calculated, and the position of the welding gun is then adjusted. This method has a disadvantage in that welding spots are not used for said points and, therefore, additional time is spent on unproductive operations of determining the angle of inclination of workpieces prior to welding. It can be assumed that said method can be used to determine the incline of the workpieces during welding cell setup but in this case, the adjustment of the position of the welding gun is carried out only in relation to the workpieces on which the setup is performed. When welding further workpieces, the correction is not performed, thus reducing welding quality. It should be noted that workpieces with poor-quality welding spots require further finishing, leads to additional time spent in the production process. Thus, the above method does not allow to achieve high welding cell performance.

Based on the foregoing, in order to solve the problems of the prior art, the object is to provide a welding cell control method that would increase productivity and energy efficiency of the welding cell while ensuring high welding quality, as well as a method for controlling a robot equipped with a welding gun with two movable electrodes and forming a movement trajectory for the welding gun that would increase productivity of the welding cell.

### SUMMARY OF THE INVENTION

To solve the problems of the prior art and achieve the set technical object, a welding cell control method is proposed. The welding cell comprises an industrial robot with a welding gun fixed thereon, the industrial robot being configured to move the welding gun relative to the workpieces and between welding spots to be performed on said workpieces, wherein said welding gun comprises movable electrodes, wherein each of said electrodes is controlled by a corresponding electromechanical actuator (EMA) and each of said EMAs is independently controllable, and the welding gun comprises force sensors configured for measuring a force on said electrodes.

The welding cell control method includes the following steps:
- forming a movement trajectory of a target point X of electrodes closure as extending between outer surfaces of the workpieces and through the welding spots, and
- forming a movement trajectory of centers of end surfaces of the electrodes between at least two consequent welding spots as a sum of a movement trajectory of the welding gun and a movement trajectory of the electrodes.

The movement trajectory of the welding gun tracks the movement trajectory of the target point X of electrodes closure between said at least two consequent welding spots, wherein the target point X of electrodes closure forms a straight line when projected onto a plane parallel to the surface of at least one of the workpiece along which the welding gun is moved, or a plane tangential to the surface of at least one of the workpieces at one of said welding spots. Therewith, the target point X of electrodes closure forms a line following a shape of the surface of at least one of the workpieces when projected onto a plane passing through a normal line relative to the surface of said at least one of the workpieces and through said two consequent welding spots. The movement of the welding gun is stopped when the movement trajectory of the target point X of electrodes closure coincides with the welding spot and so as to ensure that the end surfaces of the electrodes are perpendicular to the surfaces of the workpieces before they are compressed at the welding spot.

The electrodes comprise at least a first electrode and a second electrode, and the movement trajectory of the electrodes is such that:
- when moving from a first welding spot, the electrodes are moved in the direction away from the workpieces to a distance allowing the welding gun to move to a second welding spot along said movement trajectory of the welding gun without the electrodes contacting the surface of the workpieces,
- wherein when moving to a second welding spot, the first electrode starts moving towards the surface of the workpiece before or after stopping the welding gun, the first electrode contacts the surface of the workpiece after stopping the welding gun and its movement is stopped while maintaining an obtained position, wherein said contact is determined based on a change in data from the force sensor of the first electrode, wherein
- when moving to the second welding spot, the second electrode starts moving in the direction towards of the workpiece before or after stopping the first electrode, the second electrode contacts a surface of an opposite workpiece and its movement is continued until a targeted compression force of the workpieces is gained by the first and second electrodes, wherein said contact is determined based on the change in data from the force sensor of the second electrode, and targeted compression force gain is determined based on the data from the force sensors of both said electrodes.

After the second welding spot is welded, the welding gun starts moving to the next welding spot after said electrodes start moving in the direction away from the surfaces of the workpieces and before or after stopping said electrodes.

The proposed welding cell control method is based on the formation of the movement trajectory of the centers of the end surfaces of the electrodes, i.e. formation of the final trajectory of points located on the end surfaces of the electrodes contacting with surfaces of the workpieces as the sum of the movement trajectory of the independently moving electrodes and the movement trajectory of the welding gun driven by mutual movement of links of the industrial robot.

The technical effect achieved by implementing the claimed method is an increase in productivity and energy efficiency of the welding cell while ensuring high welding quality.

The implementation of two movable electrodes in the welding gun allows to avoid bringing the welding gun to the workpiece by an industrial robot until one of the electrodes contacts the workpieces, thus reducing movement duration and energy consumption. In the welding cell, the control method of which is described in the present invention, the industrial robot brings the welding gun to the welding spot in such manner that a distance is maintained between the electrode and the workpiece. Said distance should be smaller than the EMA stroke, taking into account the deformation of the welding gun when compressing the workpieces due to the application of force thereto, in order to allow for gaining welding force by moving the electrodes without changing the position of the welding gun, *thus improving performance of the cell and reducing energy consumption* as the process of the electrode contacting the workpieces is carried out by means of a faster and less energy-intensive movement of the EMA electrodes.

Each of said electrodes is controlled by a separate EMA which can be controlled independently of the second, which is required *for implementing various time diagrams* of movement of the welding gun and the electrodes and for providing additional advantages *in terms of welding cell performance* as described hereinafter.

The use of the force sensors configured for measuring the force on said electrodes in the welding gun allows to detect the contact between the electrode and the workpieces and gain a target compression force on the workpieces applied by the electrodes based on direct force measurements, which has a *positive effect on welding quality.* It is important to note that the performance is also improved by the fact that target force gain is performed according to the data of the force sensor and not according to an indirect parameter, e.g., current consumption of the motor. To perform high-quality welding, the welding process needs to be initiated after reaching target force which is more accurately and quickly achieved based on the data of the force sensor.

The movement trajectory of the industrial robot is built in such a way that the industrial robot moves the welding gun between two welding spots along the envelope surface of the workpieces, ensuring that said target point X of electrodes closure (hereinafter referred to as point X) constantly remains between the outer surfaces of the workpieces. The point X is located within the workpieces or within the gap between the workpieces. The point X is the target point for the formation of the welding nugget - the intended welding center without taking into account any tolerances and deviations. All tolerances and deviations are set parameters which leads to the point X being located in a certain range, i.e. in a certain area on the normal line to the end surface of one of the electrodes.

This provides the shortest movement distance of the welding gun between two consequent welding spots is provided, and accordingly, the *minimum possible movement time is provided without the risk of collision between the welding gun electrodes and the workpiece surfaces.*

In the process of moving the welding gun by the industrial robot, the position of the welding gun is such that at the expected moment of welding gun closure, the end surfaces of the electrodes will be parallel to the tangential planes of the workpieces at the point of contact between the electrodes and the workpiece. Thus, after welding gun closure, the most complete adherence of the welding electrode caps to the surface of the workpieces being welded will be ensured, providing a *positive effect on welding quality,* as the required resistance between the electrodes and the workpieces and between the workpieces is ensured to form the required welding nugget and a strong welded joint.

The industrial robot moves the welding gun in such a manner that the point X coincides with the targeted formation point of a welding core. When point X reaches the targeted formation point of the welding core (welding point), the welding gun is stopped. Before or after end of movement of the welding gun, the first electrode begins to move relative to the welding gun in the direction of the workpieces at maximum speed for most of its travel towards the workpiece and slows down prior to contact between the electrode and the workpiece. The first electrode contacts the workpieces after the welding gun stops. This first electrode is controlled based on force, i.e. the contact between the first electrode and the surface of the workpieces is determined based on the data of force sensor of the first electrode, and after detecting contact, the first electrode is stopped. Therefore, *welding quality is made more independent from error in workpiece placement.* After contact, EMA control of the first electrode is aimed at maintaining the position held by the first electrode. The second electrode begins to move relative to the welding gun in the direction of the workpieces at maximum speed which is obviously higher than the movement speed of the electrode over the same distance by means of moving the welding gun and the industrial robot having a large weight, therefore *reducing welding cycle duration as well as energy consumption.* This second electrode is also controlled based on force, i.e. the contact between the second electrode and the surface of the workpieces is determined based on the data of force sensor of the second electrode, and after detecting contact, the sensor electrode continues movement at a reduced speed to provide force gain. In the process of gaining the force, the control system processes signals (data) of the force sensors from both electrodes, and the completion of the force gain process is determined after equal values close to the target value set by the welding program is detected by the force sensors of both electrodes. Thus, equalizing (equalizing the pressing force of the first and second electrodes on both sides of the workpiece) is provided in the force gain process, thus eliminating additional movement of the industrial robot and the welding gun after gaining force and, accordingly, *reducing welding cycle duration and energy consumption.* In addition, equal force on both electrodes is ensured based on direct measurement, clearly providing higher accuracy compared to equalizing achieved by preset movement of the industrial robot regardless of the actual position of the workpieces and, accordingly, having a *positive effect on welding quality.*

After forming the welding nugget, each electrode moves away from the workpieces, and the industrial robot moves the welding gun to the next welding spot.

In one embodiment, said welding gun is a gun with at least electrode thereof moving in a longitudinal direction: a C-type welding gun, i.e., a gun comprising two electrodes moving in a longitudinal direction; or an X-type welding gun comprising one electrode moving in a longitudinal direction. In such welding guns, the first electrode is understood to be the electrode located on a stiffer arm of the welding gun. Thus, it is ensured that in the process of welding force gain by moving the second electrode while maintaining the position of the first electrode, it will be possible to compensate for elastic deformation of the welding gun, thus avoiding potential deformation of the workpieces being welded and having *a positive effect on welding quality.* As it is not required to move both electrodes when gaining the force and only one electrode is moved instead, *energy consumption is significantly reduced.* In this case, the point X is located at such a distance from the end surface of the second electrode that said distance does not exceed the operational stroke of the EMA of said electrode, taking into account at least one of the following parameters: the thickness of the workpieces being welded, the accuracy tolerance for said thickness, the value of the possible gap between the workpieces, the location accuracy for the workpieces, the rigidity of the welding gun and the degree of wear of the cap of said second electrode, thus, the movement of said electrode by means of its EMA allows for gaining the force required by the welding program without additional movement of the welding gun and the industrial robot, which is *faster and less energy-intensive.*

In one embodiment of the present invention, said welding gun is an X-type welding gun, i.e., arms of the welding gun have a common axis about which angular movement is performed. In this embodiment of the welding gun, the arms thereof have an equal or approximately equal stiffness, and the point X is located on a circumference with a center coinciding with the common axis of rotation of the arms of the welding gun, the radius of which is equal to a distance between the common axis of rotation of the arms of the welding gun and the center of the end (contact) surface of one of the electrodes. In this case, it is advisable to define the point X as equidistant from the end surfaces of the electrodes, so that each of them passes the same distance during the closure process. After the first electrode contacts the workpieces, it maintains the achieved position. After the second electrode contacts the workpieces, both electrodes gain force by moving towards the workpieces, providing an equal force value on both electrodes without additional movement of the welding gun and the industrial robot, *which is faster and less energy-consuming.* Arranging the point X at an equal distance from the end surfaces of both electrodes ensures that they need to travel equal distances before contacting the workpieces and therefore, at an equal movement speed of the electrodes, ensures equal time spent to carry out this process. Consequently, the first electrode contacting the workpieces switches to maintaining the position, but due to small time difference, it does not have time to stop completely, which contributes to the faster gain of the force required by the welding program to compress the workpieces using the electrodes and *reduces welding cycle duration.*

In another embodiment of the present invention, the distance between the end surface of the electrode and the target point X of electrodes closure is determined based on the minimum distance required by the electrode to accelerate to the speed necessary to gain a predetermined amount of force in a minimum amount of time. Therefore, it is possible to avoid the need to accelerate the electrode after it contacts the workpiece which would significantly reduce acceleration or increase energy consumption. The speed value is determined by the amount of force required. The greater the force, the higher electrode speed should be to minimize force gain time, as the greater the force, the greater the deformation of the welding gun and therefore, the greater the distance that the electrode travels when compressing the welding gun. Thus, the *shortest force gain time is achieved, i.e. the productivity of the welding cell is increased.*

In another embodiment, the second electrode are moved to the specified distance between the end surface of the second electrode and the target point X of electrodes closure before the welding gun stops. Importantly, when determining the relation between the distance at which the second electrode is located when moving the welding gun along the workpieces and the speed and, in fact, the force that needs to be gained, it is feasible to move the second electrode to the desired opening distance while the industrial robot moves the welding gun from the welding spot to another welding spot if the welding force therebetween is different. Thus, by moving the electrode to the desired movement start position in advance, it is possible *to reduce welding cycle duration.*

In another embodiment of the present invention, when the welding gun is moved by the industrial robot, the movement trajectory of the point X is formed so that it is arranged between the outer surfaces of the workpieces and is equidistant from them. This ensures a stable distance between the end surfaces of the electrodes and the outer surfaces of the workpieces and therefore, ensures a stable and minimum electrode closure time and gaining the required compression force of the workpieces by the electrodes, which ensures *a consistently low welding cycle duration and increases welding cell productivity.*

In another embodiment of the present invention, the movement of the first electrode is started before the welding gun stops at the welding spot. The moment of starting movement of the first electrode is determined based on movement speed of the welding gun, the movement speed of the first electrode, the distance between the end surface of the first electrode and the surface of the workpieces and the accuracy tolerance for the position of the workpieces in such a way as to stop the movement of the welding gun by the industrial robot before the first electrode contacts the surface of the workpieces. Thus, the movement of the welding gun relative to the workpieces and the movement of the first electrode towards the workpieces are carried out simultaneously which allows to minimize the time required for the first electrode to contact the workpieces after the welding gun stops, and therefore *reduce welding cycle duration and increase welding cell productivity* compared to the embodiment wherein the movement of the first electrode starts after the welding gun stops.

In another embodiment of the present invention, the movement of both electrodes towards the workpiece starts before the welding gun stops. The moment of starting electrode movement is determined based on movement speed of the welding gun, the electrode movement speed, the distance between the end surface of the electrode closest to the workpieces and the surface of the workpieces and the accuracy tolerance for the position of the workpieces in such a way as to ensure that the welding gun stops before the first electrode contacts the surface of the workpieces and that the first electrode contacts the surface of the workpieces before the second electrode contacts the surface of the workpieces. This provides an additional reduction in welding cycle duration, and, consequently, an increase in *productivity of the welding cell.*

In another embodiment of the present invention, the movement of the welding gun in the direction of next welding spot starts before the electrodes are fully opened, which further shortens the welding cycle and increases *productivity of the welding cell.* In this case, the movement of the welding gun should be started after the separation of both electrodes from the surface of the workpieces and, taking into account the curvature of the surfaces of the workpieces between welding spots, sufficient opening of the electrodes should be provided to move the welding gun without collision with the workpieces.

In another embodiment of the present invention, the actual separation of the electrodes from the surface of the workpieces is determined based on the data of the force sensor for each electrode, allowing to initiate the welding gun movement only after the actual separation of the electrodes from the surface of the workpieces, thereby preventing potential damage to the workpieces at the welding spot or damage to the contact surfaces of the electrode caps in case they stick to the workpieces after welding, thus *improving welding quality.*

In another embodiment of the present invention, said force sensors configured for measuring the force on electrodes are implemented in the design of said electromechanical actuators (EMA). In the process of gaining the compression force of workpieces required by the welding program, elastic deformations of the welding gun occur, said deformations depending on the rigidity of their structure. The force sensors of the electrodes can be mounted on structural elements of the welding gun, e.g. on the electrodes, but this has a significant drawback. The sensors sense deformation caused by stretching, bending and torsion of the element on which they are arranged. In other words, force values recorded by the force sensors will reflect not only the value of the axial force acting on the electrode but also the radial force. The axial force value is the useful force value for the welding process, and to ensure stable welding quality, it is important to ensure that the value is accurate. Thus, the implementation of force sensors in the EMA design reduces effect of elastic deformation of the welding gun on the recorded value and increases the accuracy of measuring the force in the axial direction, providing a *positive effect on welding quality.*

In another embodiment of the present invention, both the movement of the welding gun and the movement of the movable electrodes are controlled by the industrial robot controller. However, when detecting contact of the electrode with the surface of the workpieces based on the data of the force sensor, the electrode is moved at a high (preferably maximum) speed until reaching the force value characterizing the resistance of the workpieces to deformation upon contact. Afterwards, the electrode must be stopped with maximum possible acceleration. Consequently, the delay between the sensor determining the force value and the processing of the EMA stop command has a significant impact on welding quality, as with too high a delay, the workpieces being welded can be deformed by the moving electrode. Similarly, when the required workpiece compression force is set by the welding program based on the readings of the force sensors, said delay can:
- have a negative impact on welding quality if the electrodes are stopped when the required force is reached, as in this case the actual force value will be higher than the recorded value;
- have a negative impact on welding cell performance if the electrodes are stopped after the required force gain and the force value is recorded after stopping and additional adjustment, as this increases the required force gain duration.

When the present method is implemented by means of an industrial robot controller, the above delay can be quite critical due to insufficient speed of signal transmission channels and hardware of the controller. The effect of the above delay can be compensated for at the program level by introducing correction factors taking into account the duration of the delay, electrode movement speed and the rigidity of the welding gun structure. However, the implementation of control of the movable electrodes by means of their own control system having high-speed communication channels with the force sensors, a higher value recording frequency and a higher data processing speed allows to ensure *higher welding cell productivity and welding quality.*

In another embodiment of the present invention, in each set of welding spots, for at least the first two welding spots, before or after the welding gun is stopped, a distance between the end surfaces of the electrodes and the target point X of the electrodes closure is provided, said distance being such that the end surfaces of the electrodes do not contact the surfaces of the workpieces, and the electrodes are moved at low speed until they contact the surface of the workpieces, determined by changes in the data from the force sensors. At the moment when the electrodes contact the surface of the workpieces, an actual position of each of at least the first two contact points between the electrodes and the surfaces of the workpieces is determined based on positions of the electrodes. An actual position of the workpieces in the tooling based on the difference in the positions of the electrodes is calculated and the coordinate of the speed reduction point is adjusted at the following welding spots after determining the actual position of the workpiece in at least two previous welding spots. Then, a position of the welding gun relative to the workpieces is adjusted and the perpendicularity of the normal line drawn between the centers of the end surfaces of the electrodes to the surfaces of the workpieces at each welding spot located on the movement trajectory of the target point X of the electrodes closure. This method allows to compensate for the inaccuracy of workpiece mounting in the tooling, that is, to reduce the distance that the electrode travels at low speed to contact the workpieces, and to maximize the distance that the electrode travels at maximum speed for each welding spot, *thus reducing welding cycle duration* even in cases of positional deviation of the parts from the expected position. In other words, if the actual coordinates of the welding spots deviate from the programmed coordinates, it is possible to correct the programmed coordinates on the subsequent welding spots and to correct the position of the welding gun at each subsequent welding spot in order to reduce the distance that the electrode travels at low speed. It is important to note that when moving from one welding spot to another, it is necessary to ensure that the welding gun electrodes do not collide with the workpieces. Hence, it is necessary to open the welding gun after welding at a welding spot, i.e. to withdraw the electrodes away from the workpieces by a distance sufficient to prevent any such collision. The correction of the programmed welding spot coordinates allows to ensure the constancy and reduction in the distance to which the electrodes are withdrawn and therefore *to increase productivity, reduce energy consumption and ensure that welding quality does not depend on the actual position of the workpieces.*

In another aspect of the present invention, forming a movement trajectory of a target point X of the electrodes closure using a 3-dimensional computer model of the workpieces to be welded. In particular, the process of setting up the welding cell to weld new workpieces can be performed based on 3D models of the workpieces to be welded. Parameters such as the dimensions of the workpieces, the accuracy of said dimension values, and the configuration of their surfaces are described in the parameterized 3D model. Based on said parameters, as well as additional specified parameters which may include: the position of the workpieces in the welding cell, tolerances for the accuracy of said position, possible threshold values for gaps between the workpieces, the operating stroke values for the EMA electrodes, the achievable speed and acceleration values for the EMA electrodes, the coordinates of the welding spots in the coordinate system of the workpiece 3D model, the target force values for compressing the workpieces using the electrodes at welding spots, etc., the software determines the position of the point X relative to the welding gun, its movement trajectory relative to the workpieces and the movement trajectories of each electrode. The above setup can be carried out without suspending operation of the physical welding cell, and consequently, setup duration and the period of inoperability of the welding line can be reduce, thus *increasing welding line productivity.*

In another aspect of the present invention, the process of setting up the welding cell to weld new workpieces can be performed as follows:
- a welding gun controlled by an operator is positioned into a vicinity of a welding spot without contact between electrodes and workpieces, ensuring perpendicularity of a normal line of end surfaces of the electrodes to surfaces of the workpieces at an intended contact point, thus *reducing setup time* as there is no need for the operator to manually bring one of the electrodes close to the workpiece before contact, which, of course, requires higher accuracy and longer process duration;
- then, at the operator's command, in automatic mode, the electrodes (together or alternately) are driven in the direction of the workpieces by means of their EMA and contact the workpieces, the contact with the workpieces being detected based on the data from the force sensors of the electrodes. The actual physical position of workpiece surfaces is thus determined;
- taking into account the additional parameters entered into the cell software by the operator, wherein said parameters can include: accuracy tolerances for workpieces, accuracy tolerances for the location of the workpieces in the welding cell space, operating stroke values for the EMA electrodes, the achievable speed and acceleration of the EMA electrodes, and other parameters, the cell software calculates the position of the target point X of electrodes closure and the target position of the target point X of electrodes closure in the workpiece space, and determines (if necessary) the required positional shift for the welding gun relative to the position established by the operator;
- by means of a signal from the cell software, the welding gun and the industrial robot are automatically or manually (by the operator) shifted to the required position, which is stored as the welding spot coordinates.
- by controlling the electrode EMA, the operator ensures that the electrodes are sufficiently open to move to the next welding spot without contact with the surface of the workpieces by taking into account their curvature, and moves the welding gun and the industrial robot along the surface of the workpieces to the next welding spot, storing intermediate coordinates for the subsequent automatic movement of the welding gun and the industrial robot;
- the procedure is repeated until the welding gun and the industrial robot are set up for all welding spots.
In another embodiment of the present invention, after calculating the position of the target point X of electrodes closure the electrodes are moved so that a distance from their end surface to the target point X of electrodes closure does not exceed an operational stroke of the EMA of the specified electrodes, taking into account at least one of the following parameters: a thickness of the workpieces to be welded, an accuracy tolerance for said thickness, a gap between the workpieces, a location accuracy of the workpieces, a rigidity of the welding gun and a degree of wear of caps of said electrodes.

During setup, after calculating the position of the target point X of electrodes closure, the welding gun is shifted and one of the electrodes is retracted while the other electrode is extended, wherein the welding gun and electrode movement distances are equal in absolute value, and the movement value is calculated so that the distance between the electrode and the surface of the workpiece is less than the operating stroke of the EMA moving said electrode. The greater the EMA stroke value, the greater the length of the EMA and therefore its weight, it is thus preferable to use the EMA stroke optimally. As mentioned earlier, the workpieces have a tolerance for thickness, a tolerance for the gap therebetween, and a tolerance for placement. Further, when moving the industrial robot, the operator visually determines the placement of the welding gun relative to the workpieces. Due to such inaccurate placement of the welding gun when determining the point X and the placement of the workpieces, the electrode can be extended to a distance that will not provide a sufficient range for its operating stroke for further extension, e.g. in case of wear and sharpening of the electrodes (with wear, the electrode decreases in length, meaning that the distance between the electrode and the workpiece increases). Thus, due to shifting the welding gun and the electrodes after detecting the workpieces in space, it is possible to reduce operating stroke of the EMA and, consequently, reduce the weight of the welding gun and eliminate unproductive movement of the welding gun by the industrial robot when transporting the welding gun between welding spots, thus increasing welding cell productivity.

### BRIEF DESCRIPTION OF THE DRAWINGS

The essence of the present invention is explained in more detail using non-limiting examples of its implementation with reference to the accompanying drawings:
FIG. 1 illustrates a C-type welding gun.
FIG. 2 illustrates an X-type welding gun wherein one of the electrodes is configured for translational movement.
FIG. 3 illustrates an X-type welding gun wherein both electrodes are configured for angular movement.
FIG. 4 illustrates movement trajectories of the electrodes and the welding gun in two-dimensional space.
FIG. 5 illustrates the location of the point of the electrodes targeted closing relative to the workpieces to be welded when the electrodes are compressed.
FIG. 6 illustrates the location of the point of the electrodes targeted closing relative to the workpieces to be welded before the electrodes are compressed.
FIG. 7 illustrates movement trajectory of the centers of the electrode end surfaces between two welding spots in an isometric view.
FIG. 8 shows a projection of the movement trajectory of the centers of the electrode end surfaces between welding spots onto a plane tangential to the surface of at least one of the workpieces.
FIG. 9 shows a projection of the movement trajectory of the centers of the electrode end surfaces between two welding spots onto a plane built through a projection on a plane tangential to the workpieces and normal to one of the welding spots.
FIG. 10 illustrates movement trajectory of welding gun electrodes between adjacent welding points on the workpieces to be welded.
FIG. 11 illustrates diagrams of welding cycles.
FIG. 12 shows a diagram of a part of the welding cycle.
FIG 13 shows two pluralities of welding spots.
FIG. 14 shows the programmed coordinates of welding spots on the workpieces, the movement trajectory of the welding gun, and the actual welding spots.

### DETAILED DESCRIPTION OF THE INVENTION

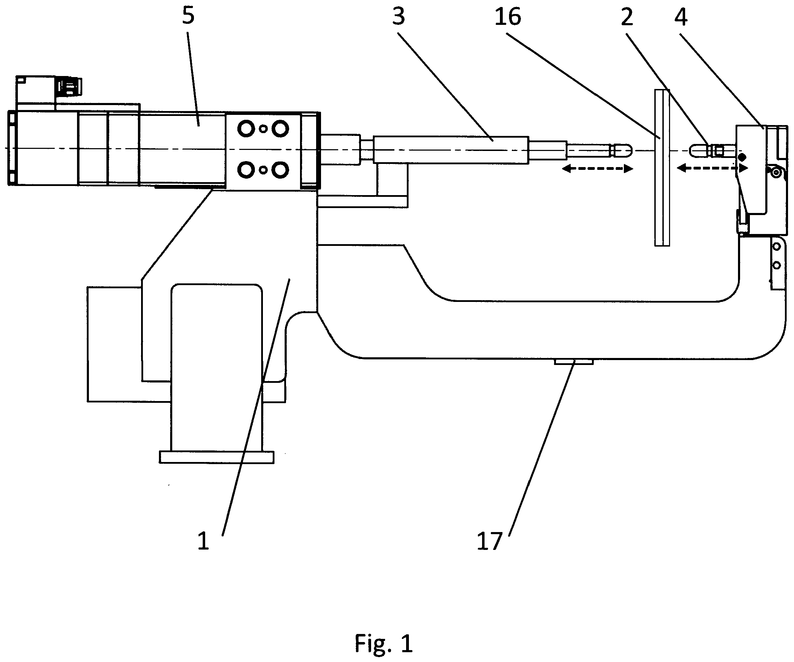

The implementation of the invention requires an industrial robot (not shown in the figures) and a C- or X-type welding gun with two movable electrodes. FIG. 1 shows a C-type welding gun comprising a frame 1, a first movable electrode 2, and a second movable electrode 3. The electrode 2 is fixed on the EMA 4 and is driven by said EMA to move. In turn, the electrode 3 is fixed to the EMA 5 and is driven by said EMA to move. EMAs 4 and 5 are fixedly secured on the frame 1. Both electrodes 2 and 3 move in a reciprocating manner.

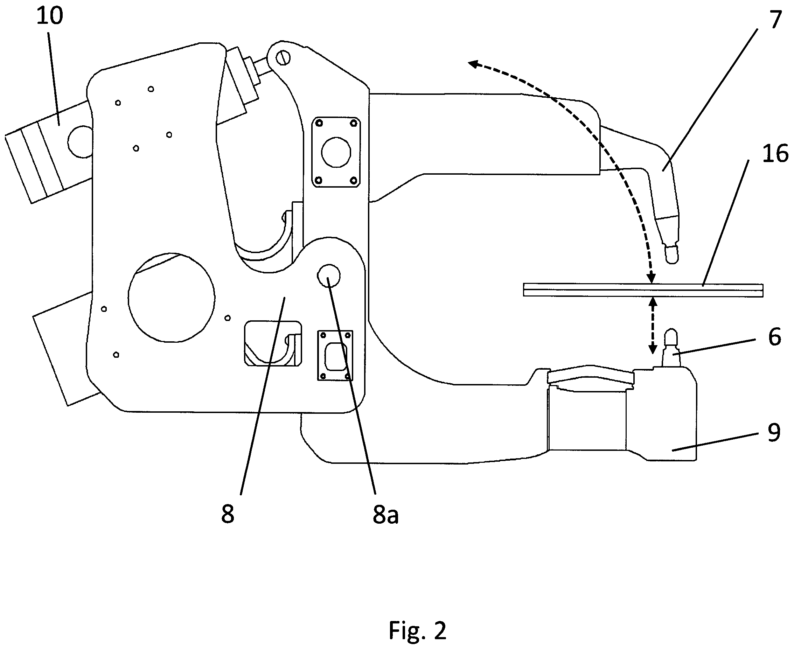

FIG. 2 shows an X-type welding gun comprising an electrode 6 and a second electrode 7 fixed on and moved by the EMA 9 and the EMA 10, respectively. The electrode 6 moves in a reciprocating manner. The electrode 7 is fixed on the frame in such a way that it rotates about the axis 8a, which is the axis of rotation on the frame 8, i.e. the movement trajectory of the electrode 7 is described by an arc with a radius in the center of said axis.

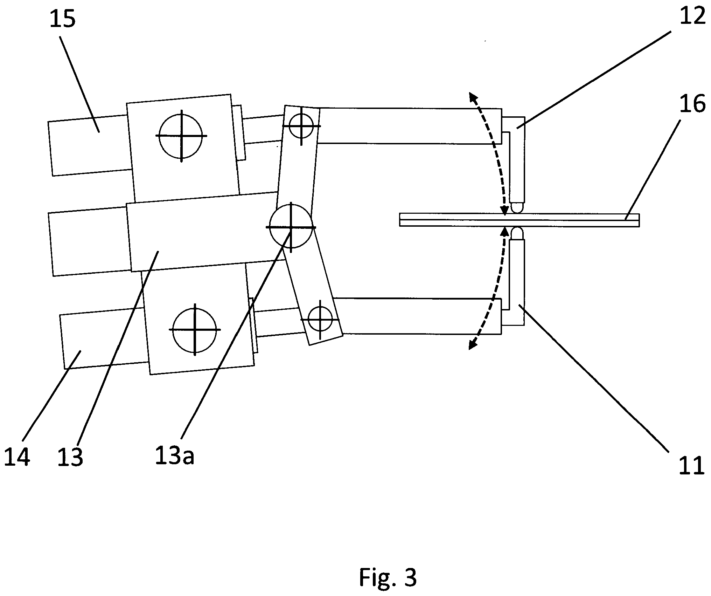

In another embodiment, the welding cell control method is implemented using the X-type welding gun shown in FIG. 3. Arms of the welding gun, on which the electrodes 11 and 12 are attached, have a common axis around which they move in an angular manner. This axis is the axis 13a of rotation on the frame 13. The electrodes 11 and 12 are moved by the EMA 14 and the EMA 15. The EMAs 14 and 15 can be formed by any conventional EMA structure. In the disclosed embodiment, the EMAs 14 and 15 comprise an integrated electric motor with a stator and a rotor (not shown in the figures) for generating torque transmitted to a roller-screw gear (hereinafter referred to as RSG) (not shown in the figures) converting rotational motion and torque into translational motion and axial force transmitted to the electrode of the welding gun. In the EMAs 14 and 15 of any design, a position sensor (not shown in the figures) is integrated, and signal therefrom allows the control system, e.g. a frequency converter (not shown in the figure), to determine the position of the welding gun electrode. To measure the force with which each electrode is pressed against the workpieces 16, a force sensor is built into each EMA 14 and 15. The force sensor can be formed by a piezoelectric transducer or a strain gauge bridge and is located inside the EMA so that when force is applied to the electrode, said force is transmitted through the RSG to the force sensor. For example, a nut of the RSG (not shown in the figures) is installed in a bearing support consisting of at least one ball bearing. An inner ring of the bearing rests against the nut of the RSG, and an outer ring of the bearing rests against the force sensor, which is in contact with a housing of the EMA in its internal cavity. Through the balls, the bearings transmit force from the RSG to the force sensor. In another embodiment, a ball-screw gear can be used instead of an RSG, and an electric motor can be arranged outside the EMAs 14 and 15. The force sensor can be arranged on the welding gun, e.g. directly on the electrodes. Arranging the force sensor 17 on the electrode 2, e.g. as shown in FIG. 1, has a significant disadvantage of lower force measurement accuracy, as such a sensor is subject to a torsional force and a bending force due to a radial load acting on it. In turn, the force sensor built into the EMA measures axial force with minimum influence from other components.

The welding gun is transported by an industrial robot (not shown in the figures) such that workpieces 16, e.g. parts of a car body (FIG. 3), are arranged between the welding gun electrodes. There can be two or more workpieces 16, e.g. 3 workpieces.

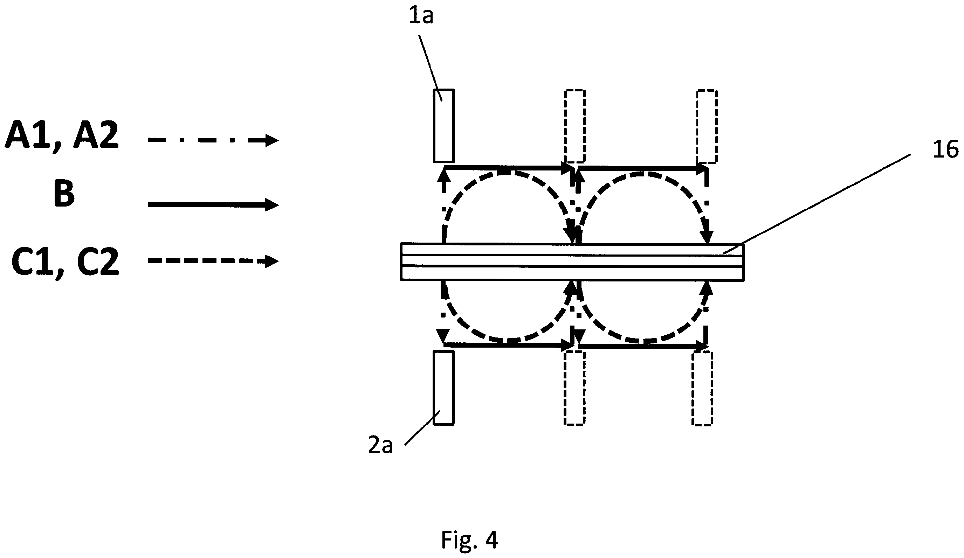

It should be noted that the present welding cell control method is based on forming a movement trajectory of centers of the end surface of the electrodes contacting the surface of the workpieces 16 as a sum of movement trajectories of independently moving electrodes and a movement trajectory of the welding gun. FIG. 4 shows a trajectory A1 of a first electrode and a trajectory A2 of a second electrode, a movement trajectory B of the welding gun moved by the industrial robot (not shown in the figures), and the sum trajectory C1 or C2 of points coinciding with the centers of the end surfaces of the electrodes; in other words, the sum trajectory C1 or C2 is the trajectory movement of the centers of the end surfaces of said electrodes between two welding spots. The trajectory B is shown as a straight line, in the case of welding workpieces shown as rectangles in a section passing through the centers of the welding spots. In the case of a curvature present in the workpieces 16, the trajectory B should have the same curvature following the shape of the outer surface of the workpieces 16. The first electrode 1a of the welding gun moves along the trajectory A1 in a reciprocating manner. The second electrode 2a of the welding gun moves along the trajectory A2 in a reciprocating manner. The movement trajectories C1 and C2 of the end surfaces of the electrodes are arc-shaped as the industrial robot moves the welding gun along the trajectory B simultaneously with the movement of the electrodes, i.e. the movement of the electrodes from the workpieces 16 and to the workpieces 16 preferably starts and ends simultaneously with the start and the end of the movement of the welding gun between welding spots.

In order to ensure uniform compression of the workpieces 16 along with equal forces acting on both sides of the workpieces 16, both electrodes of the welding gun need to be pressed to the workpieces 16 at a right angle. An incline in the position of the electrodes relative to the surface of the workpieces 16 leads to a small area of contact between the electrodes and the workpieces 16 and to exceedingly small resistance which, when the welding current flows, will lead to metal splashing from the welding nugget formation area and to overheating of the welding caps. Said splashing would require manual correction of the welding spot which reduces welding cell performance. Overheating of the electrodes requires their replacement which also requires time, thus leading to reduced productivity. Further, when the electrodes are inclined, radial loads act on the electrodes, reducing force measurement accuracy and, consequently, reducing the efficiency of controlling the compression force on the workpieces 16. Thus, in order to ensure stable quality, it is necessary to ensure the stability of controlling welding parameters which include the compression force on the workpieces 16, including the need to ensure that the electrodes approach the workpieces 16 at a right angle.

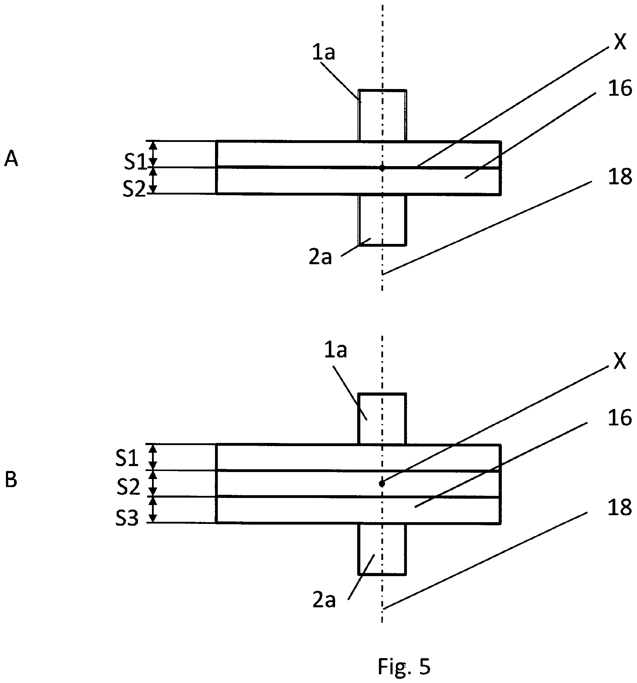

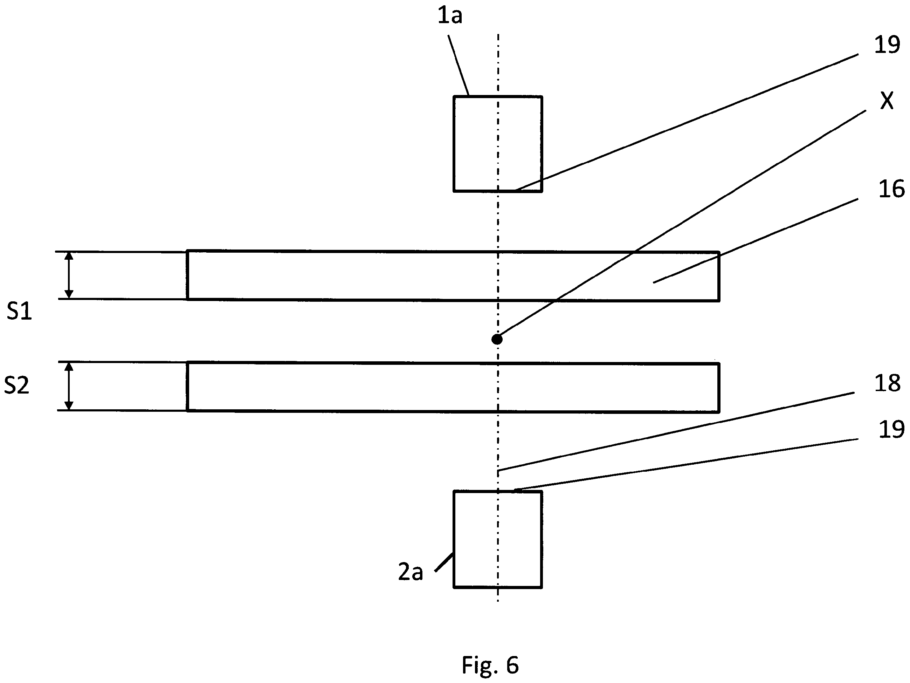

The trajectory of the welding gun moved by the industrial robot is built in such a way that the industrial robot moves the welding gun between two welding spots along the enveloping surface of the workpieces 16. In order to implement movement of the welding gun with two movable electrodes between consequent welding spots, it is necessary to determine a point in space that will be associated with the welding gun and movable electrodes. This will allow setting the movement of the welding gun along the surface of the workpieces 16, ensuring the perpendicularity of the electrodes relative to the workpieces 16 by rotating the welding gun around said point. It should be noted that welding is the process of forming a welding nugget at each welding spot, wherein it is preferable for the point in space associated with the welding gun to coincide with a point ideally located in the center of the prospective welding nugget (welding spot). This target point X of the electrodes closure (hereinafter referred to as the point X) is shown in FIG. 5. The point X is located within the workpieces 16 within the sum of the thicknesses S1 and S2 of the workpieces 16. Ideally, in the case of welding two workpieces, the point X is located therebetween, as shown in FIG. 5A. In the case of welding three or more workpieces, the point X is located in the middle of their total thickness, as shown in FIG. 5B. However, there may be a gap between the workpieces, and the workpieces themselves may be arranged in clamps (not shown in the figures) in the welding cell with some tolerance, wherein the thicknesses S1 and S2 also have tolerances. All tolerances and deviations are set parameters which leads to the point X being located in a certain range, i.e. in a certain area on the normal line 18 to the end surface 19 of one of the electrodes 1a and 2a (FIG. 6). It is worth noting that the normal line 18 is the normal line relative to the end surfaces 19 of both electrodes. This is true for a C-type welding gun at any distance between the electrodes and the workpieces 16 (as shown in FIG. 6). For an X-type welding gun, the normal line 18 will also be normal relative to the end surfaces 19 of both electrodes at the moment of pressing against the workpieces, as shown in FIG. 5, despite the fact that the trajectory of at least one of the electrodes is an arc, because of the angular movement of at least one welding gun arm.

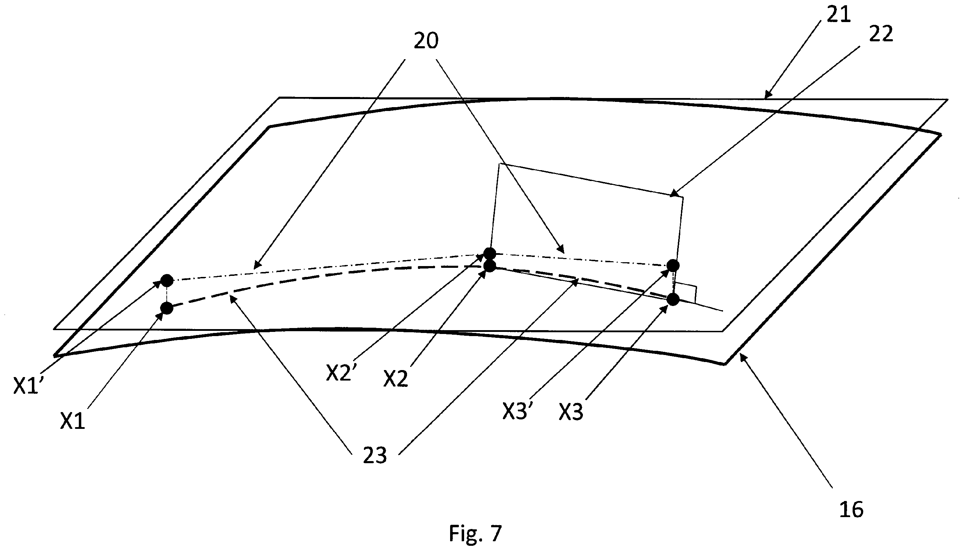

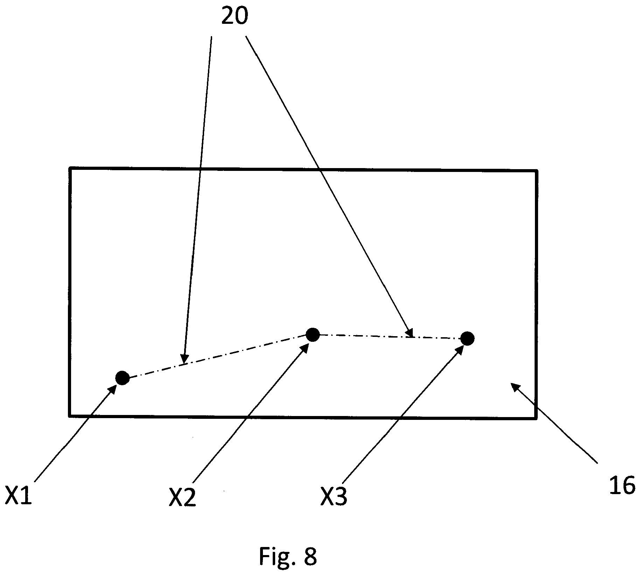

FIG. 7 shows the workpieces 16 as a surface. On said surface, consequent welding spots X1, X2, X3 are arranged. The projection 20 of the movement trajectory of the point X onto the plane 21 tangential to the outer surface of the workpieces 16 at the point X2 is a straight line passing through the projection X2' of the welding spot X2 to the plane 22 and through the projection X3' of the welding spot X3 to the plane 22. The projection 23 of the movement trajectory of the point X is projected onto the plane 22 built through the projection 20 and the normal line relative to the surface of the workpieces 16 passing through the welding spot X3. The projection 23 follows the shape of the surface of the workpieces 16 in section along the plane 4. Moreover, the plane 22 can be built through the normal line relative to any point (not shown in the figures) on the movement trajectory of the point X, e.g., to the point X2. Thus, the welding gun is moved by the industrial robot such that the point X moves in a straight line when viewed from above (FIG. 8) which is the shortest distance between two welding spots. At the same time, when viewed from the side, the point X moves along a trajectory following the shape of the workpieces so that the electrodes do not collide with the workpieces. In other words, the movement trajectory of the welding gun tracks the movement trajectory of the target point X of electrodes closure at a distance from the workpiece surface.

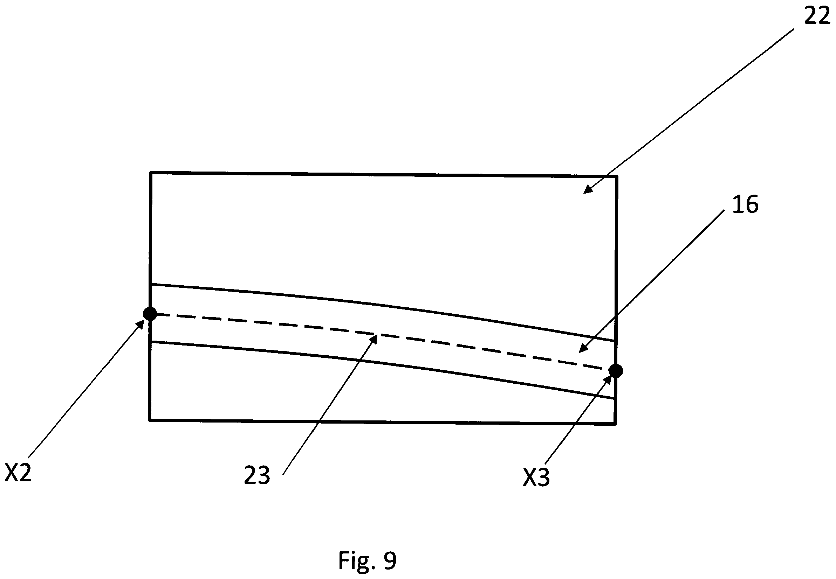

In particular, FIG. 9 shows a projection 23 of the movement trajectory of the point X and shows the workpieces 16 where it is shown that the movement trajectory of the point X follows the shape of the workpieces. The projection 23 and the boundary between the two workpieces 16 coincide (in FIG. 9, the boundary is not shown). Precision movement of the welding gun near the workpieces 16 is avoided. If there are any obstacles for the electrodes on the workpieces 16 in the form of bends, an intermediate point is added to the movement trajectory, e.g. the point X4, at which the electrodes are withdrawn from the workpiece in order to avoid collision with the workpieces 16. In this case, the movement trajectory of the point X is unchanged, as the distance from the point X to the electrodes is a dynamically variable value due to the movement of the electrodes during the welding cycle.

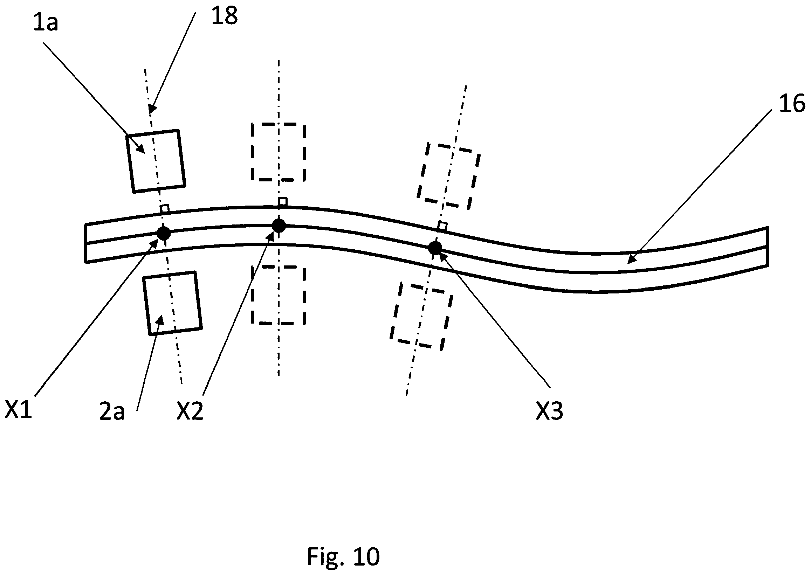

Fig. 10 shows the positions of the electrodes 1a and 2a relative to the welding gun when moving the point X from the welding spot X1 to the welding spot X2 and from the welding spot X2 to the welding spot X3. At each point along the path from one welding spot to another welding spot, the normal lines 18 relative to the end surfaces of the electrodes coincide with the normal line relative to the surface of the workpieces 16 at the intended welding location. At the same time, in the case of a C-type welding gun, the normal line relative to the end surface of each electrode coincides with the normal line relative to the surface of the workpieces 16. In the case of an X-type welding gun shown in FIG. 2, the normal line of the at least one electrode moving longitudinally coincides with the normal line relative to the surface of the workpieces 16. The X-type welding gun shown in FIG. 3 cannot satisfy this condition during movement in all planes passing through the normal line 18, as the electrodes of such a welding gun move angularly. When using said X-type welding gun, the point X lies on the circumference formed by the rotation of the point coinciding (taking into account the degree of wear of the cap of one electrode) with the center of the end surface of the same electrode, around the common axis of rotation of the welding gun arms, wherein the point X is equidistant from the end surfaces of the electrodes along said circumference, taking into account the degree of wear of the caps.

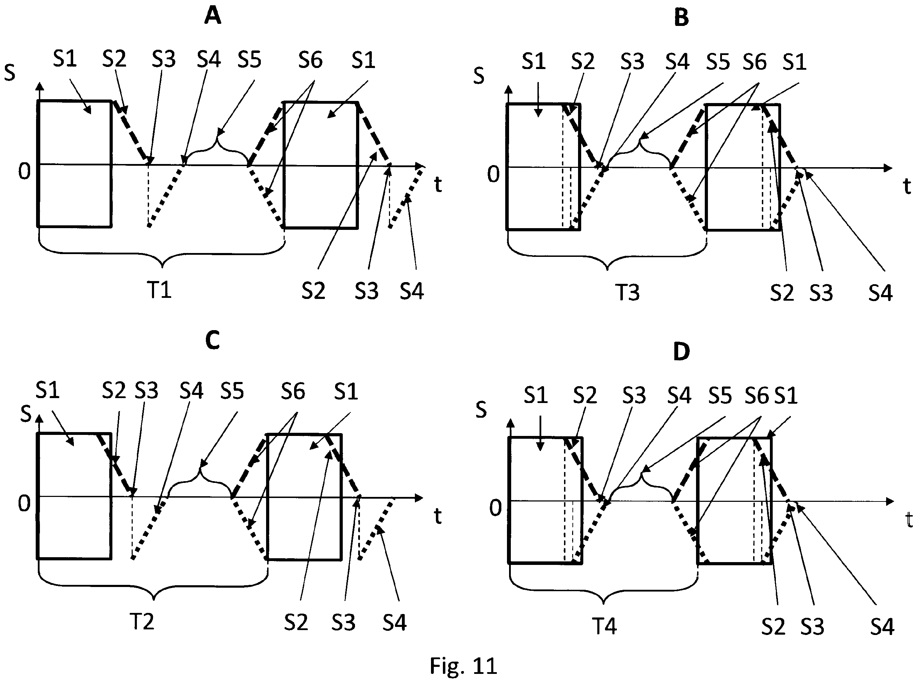

FIG. 11 shows time diagrams of the welding cycle. The welding cycle includes the following processes:
1. Moving the welding gun by means of an industrial robot between welding spots (S1);
2. Moving the first electrode 1a towards the workpieces 16 (S2);
3. Contacting the surface of the workpieces 16 with the electrode 1a (S3);
4. Moving the second electrode 2a towards the workpieces 16 (S4);
5. Forming a welding nugget at the welding spot (S5);
6. Withdrawing electrodes 1a and 2a from the workpieces (S6);

The movement of the first movable electrode 1a is started before the welding gun exits and stops in the welding spot area (FIG. 11, C). The moment of starting electrode 1a movement is determined based on movement speed of the welding gun, the electrode movement speed, the distance between the end surface of the electrode 1a and the surface of the workpieces 16 and the accuracy tolerance for the position of the workpieces 16 in such a way as to stop the movement of the welding gun by the industrial robot before the electrode 1a contacts the surface of the workpieces. Thus, the movement of the welding gun frame relative to the workpieces 16 and the movement of the electrode 1a towards the workpieces are carried out simultaneously which allows to minimize the time required for the electrode 1a to contact the workpieces 16 after the welding gun stops, and therefore *reduce welding cycle duration and increase welding cell productivity* compared to the embodiment wherein the movement of the first electrode 1a starts after the welding gun stops (FIG. 11, A). The embodiment shown in FIG. 11A is characterized by the longest duration of the welding cycle T1. When carrying out processes in the welding cycle, as shown in FIG. 11C, a duration of the welding cycle T2 shorter than that of the cycle T1 is achieved.

In another embodiment, the movement of both electrodes 1a and 2a towards the workpieces 16 starts before the welding gun stops (FIG. 11, B). The moment of starting electrode 1a and 2a movement is determined based on movement speed of the welding gun, the electrode 1a and 2a movement speed, the distance between the end surface of the electrode closest to the workpieces 16 and the surface of the workpieces 16 and the accuracy tolerance for the position of the workpieces 16 in such a way as to ensure that the welding gun stops before the first electrode 1a contacts the surface of the workpieces 16 and in such a way that the first electrode 1a contacts the surface of the workpieces 16 before the second electrode 2a contacts the surface of the workpieces. This provides an additional reduction in welding cycle duration, and, consequently, an increase in productivity of the welding cell. This embodiment provides a duration of the welding cycle T3 shorter than the duration of the cycle T2.

In a preferred embodiment, the movement of the welding gun in the direction of the next welding spot can be started before the electrodes 1a and 2a reach the position where the welding gun is fully opened (FIG. 11, D), further shortening the welding cycle to the shortest duration T4 and thus increasing *welding cell productivity.* In this case, the movement of the welding gun should be started after the separation of both electrodes 1a and 2a from the surface of the workpieces 16 and, taking into account the curvature of the surfaces of the workpieces 16 between welding spots, a sufficient distance between the electrodes 1a and 2a and the workpieces 16 should be provided to move the welding gun without the electrodes colliding therewith.

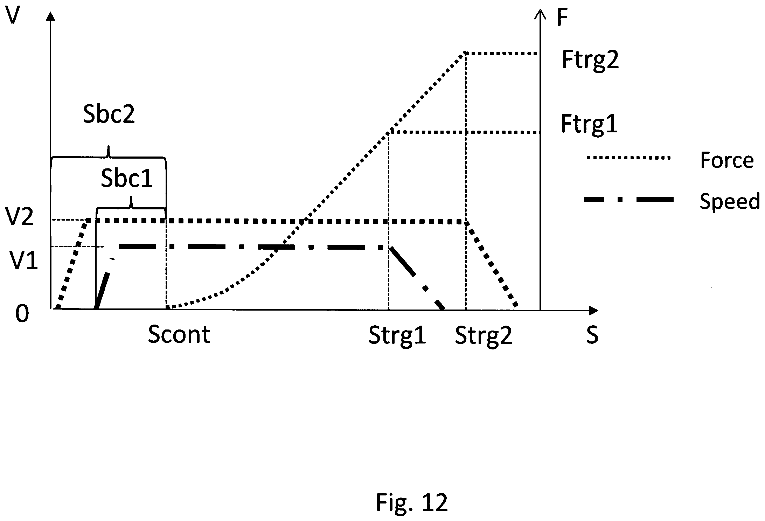

FIG. 12 shows a diagram of a part of the welding cycle showing graphs of the relationship between electrode movement speed when moving towards the workpiece and the movement path, and graphs of the relationship between the compression force applied to the workpieces and the movement path. When moving the welding gun between welding spots, both electrodes are located at a distance from the workpieces 16 such that the electrodes do not collide with the workpieces, as well as at a distance that allows the electrode to achieve the required speed V1 or V2 depending on the target force Ftrg1 and Ftrg2, respectively. The higher the force, the greater the deformation of the welding gun when the force is applied, and the greater the path the electrode travels relative to the EMA. Therefore, in order to provide a high compression speed of the workpieces 16, a high electrode speed should be provided. At the same time, the higher the speed, the longer the path that the electrode needs to travel in order to reach the required speed. It is advantageous to calculate the required distance based on the speed of electrode movement required to quickly compress the electrodes with the required force. The force Ftrg1 requires a lower speed V1 compared to V2, but the distance Sbc1 required to reach the speed V1 is shorter than the distance Sbc2 required to reach the speed V2. Welding gun electrodes are moved the required distance in advance even before stopping the welding gun in the welding spot area in order to reduce welding cycle duration.

The coordinates of the welding spots on the workpieces 16 are pre-programmed according to a three-dimensional computer model (hereinafter referred to as the 3D model) of said workpieces 16 and welding cell equipment including the industrial robot and the welding gun. Ideally, if the workpieces 16 in the tooling in the welding cell do not have deviations not included in the 3D model, during setup, the operator brings the welding gun close to one or more elements of the welding cell that are most accurate according to the 3D model, e.g. to the calibration plate, and compresses it in order to adjust the coordinate system of the industrial robot relative to the actual coordinate system based on the signal from the EMA position sensors. If large deviations in the design of the welding cell and the tooling in which the workpieces 16 are fixed are possible, then during setup of the welding cell, the operator uses the industrial robot console to bring the welding gun close to each welding spot in turn and executes the program for compressing the workpieces 16. The electrodes 1a and 2a compress the workpieces, after which the position of the electrodes at that moment and the actual coordinate of each welding spot are determined based on the signal from the EMA position sensors. The coordinate is then updated in the program, replacing the previously programmed coordinate. The position of the electrodes is adjusted so that the point X lies within the thickness of the workpieces 16. An embodiment is contemplated wherein the adjustment of the welding cell is carried out without a preliminary program with welding spot coordinates. In this case, the operator uses the industrial robot console to bring the welding gun close to each welding spot in turn and executes the program for compressing the workpieces 16. The position of the electrodes at that moment and the actual coordinate of each welding spot are determined based on the signal from the position sensors. The operator adds the coordinates of the welding spots determined this way to the program. If setup is performed according to a program built around a 3D model, the coordinates of several points determine the deviation of parts in space from the previously programmed position, and the position of the welding gun, e.g., an incline, is corrected for each welding spot.

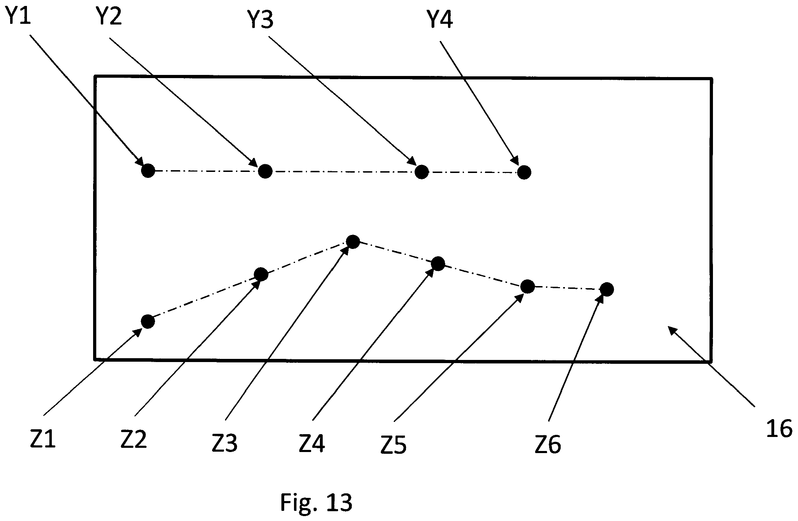

FIG. 13 shows two arrangements of welding spots in a plurality of welding spots. A group of consequent welding spots Y1, Y2, Y3, Y4 is arranged on one straight line on a projection onto a plane tangential to the workpieces 16. Another group of welding spots Z1, Z2, Z3, Z4, Z5, Z6 is not arranged on one straight line on a projection onto a plane tangential to the workpieces 16. It should be noted that in FIG. 13, the plane tangential to the surface of the workpieces 16 coincides with the surface of the workpieces 16.

The adjustment of the programmed coordinates of the welding spots and the adjustment of the position of the welding gun are carried out according to the rules described hereinafter.

For the case where a plurality of welding spots is arranged on one straight line in a projection thereof onto a plane (FIG. 13, group of welding spots Y1-Y4) tangential to the surface of the workpieces at any one of said spots, based on the actual coordinates of the two spots preceding the current spot, the angle between the tangential plane determined from the programmed coordinates of the spots and the tangential plane determined from the actual coordinates (incline of the workpieces 16 along the straight line on which the welding spots are located), and the spatial displacement of said planes (displacement of the workpieces 16 in the direction perpendicular to the tangential plane) are determined. Based on these values, the coordinates and the position of the welding gun at all points of the trajectory are adjusted.

For the case where a plurality of welding spots are not located on one straight line (group Z1-Z6) in a projection thereof onto a plane tangential to the surface of the workpieces at any one of the mentioned spots:
- For the three preceding spots, it is determined whether they lie on one straight line in a projection thereof onto a plane tangential to the surface of the workpieces at any one of said spots;
- If the spots lie on the same line, then any 2 of the last 3 preceding spots and one of the preceding spots that does not lie on the same line with them in the tangential plane are accepted for calculations (if there are no such preceding spots, then the correction is performed similarly to the case where all spots lie on the same line in the tangential plane), otherwise the last 3 preceding spots are accepted;
- Planes in which said theoretical and actual 3 spots lie are built. According to the angular deviation between these planes, the incline of the workpieces along all 3 axes is determined, and according to the spatial displacement of the coordinates of the spots, the displacement of the workpieces in the direction perpendicular to the tangential plane is determined. Based on these values, the coordinates and the position of the welding gun at all points of the trajectory are adjusted.

During setup, the operator has the opportunity to determine the actual coordinates of all points at which the position of the welding gun and the position of the electrodes are adjusted, thus reducing the distance the electrode travels at a reduced speed. During welding of the workpieces 16, for the first and second welding spots of the plurality, the electrodes are moved at a reduced speed for a distance that takes into account possible inaccuracies in the mounting of the workpieces and taking into account the adjustment of the position of the welding gun and the electrodes which is performed during setup. Starting from the first welding point, the actual position of the workpieces 16 is determined and the starting point of movement at a reduced speed is adjusted in order to reduce the distance of movement of the electrodes at the reduced speed. Starting from the third welding spot, said distance is reduced to the minimum sufficient to contact the workpieces and gain the required force taking into account the actual position of the workpieces, thus *increasing welding cell productivity.*

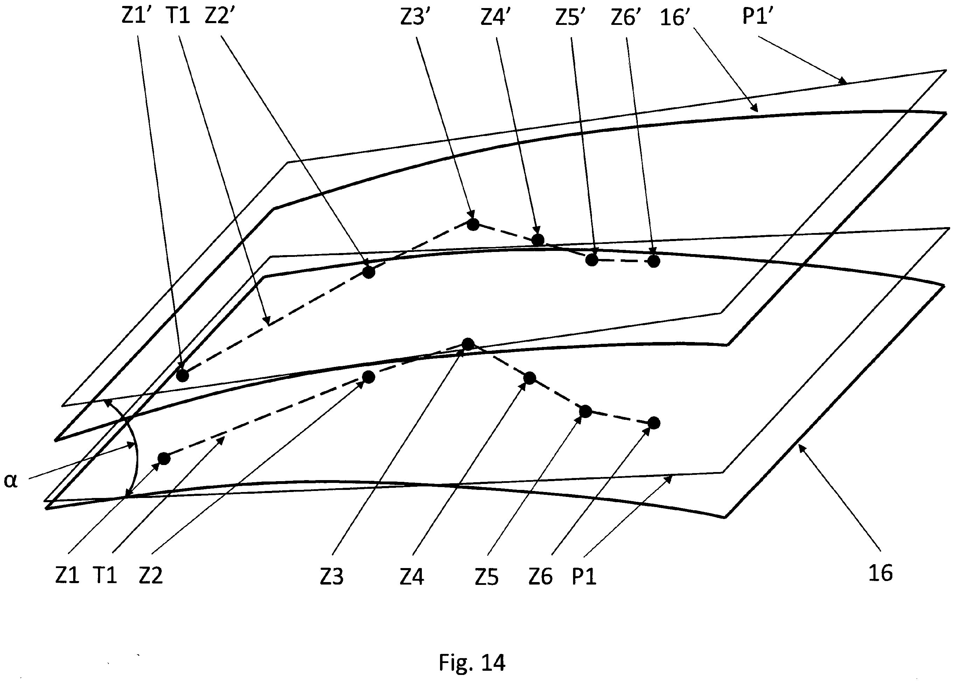

In another embodiment, the programmed coordinates of the spots are not replaced with real coordinates, and the real coordinates of the spots determine linear displacement and inclination along the angle α of the real coordinate system with respect to the programmed system. FIG. 14 shows the surface of the workpieces 16, the programmed coordinates of the welding spots Z1, Z2, Z3, Z4, Z5, Z6, and the trajectory M1 of welding gun movement, as well as the actual surface of the workpieces 16', the actual coordinates of the welding spots Z1', Z2 ', Z3', Z4', Z5', Z6', and the trajectory M1' of welding gun movement obtained by rotating the coordinate system by an angle α. The angle α is determined between the plane P1 built from the programmed coordinates of the first three spots from the plurality of welding spots Z1, Z2, Z3, and the plane P1' built from the actual coordinates of the first three welding spots Z1', Z2', Z3'. Further, during welding, at the welding spot Z4, its actual coordinate Z4' is determined and the position of the plane P 1' is updated, in particular, the angle of inclination is determined not just along the straight line on which the spots Z1'-Z3' lie, but also in other planes. Note that in the example shown in FIG. 14, the actual plane of the workpieces 16' is rotated along one of the axes, but can also be rotated along two axes. The programmed coordinate system is rotated by the difference in inclination along the three axes (X, Y, Z) such that it coincides with the actual coordinate system. This method allows to avoid reprogramming the entire movement trajectory of the welding gun but to change the coordinate system in which the trajectory is located. This method is used when the workpieces 16 have a complex shape and, accordingly, the trajectory of the welding gun also has a complex shape to ensure that the electrodes do not collide with the workpieces 16 when moving between welding spots. This method is particularly effective if the workpieces 16 have bends in areas where there are no welding spots, i.e., the coordinates of the points between which the welding gun moves are not set but the trajectory is set. In the case of simply replacing the programmed coordinates of the welding spots with the actual coordinates, the electrodes can collide with the workpieces 16 in the area between the welding spots. Adjusting the programmed coordinates of the welding spots or rotating the programmed coordinate system allows to reduce the distance (Sbc1, Sbc2 in FIG. 12) at the welding spots wherein the electrode slows down to a low speed and to keep said distance constant. Thus, the programmed coordinates of the welding spots in a plurality of welding spots are adjusted, i.e. the target point (X) of electrodes closure is shifted so that it lies within the thickness of the workpieces 16 at each welding spot. The constancy of the location of point X within the thickness of the workpieces 16 allows *to keep the distance and the time interval wherein the electrode passes at low speed constant, thus reducing welding cycle duration.*

In another embodiment of the method, the programmed coordinate of each subsequent welding spot is continuously adjusted based on the actual coordinates of the previous welding spots according to one of the two methods described above. In particular, in order to minimize welding cycle duration by minimizing low speed movement prior to the welding gun electrodes contacting the workpieces 16, the programmed coordinates for each subsequent welding spot are adjusted based on the actual coordinates of the previous welding spots. Thus, welding is performed and the programmed coordinates of the welding spots are continuously adjusted, i.e. the target point (X) of electrodes closure is shifted so that it lies within the thickness of the workpieces 16.

It is worth noting that when setting up the robot, the operator brings the welding gun to the area of the welding spot and starts moving the electrodes 1a and 2a towards the workpieces 16 according to one of the previously proposed control methods. Then, an actual coordinate of the welding spot is determined. This coordinate is used to check whether the working stroke of each EMA driving the electrodes 1a and 2a is sufficient to compress the workpieces 16, taking into account at least one of the following parameters: the thickness of the workpieces 16, the tolerance for the accuracy of this thickness, the size of the possible gap between the workpieces 16, the accuracy of the location of the workpieces 16, the rigidity of the welding gun and the permissible degree of wear of the caps on the electrodes 1a and 2a.

It is important to note that the present invention does not relate to a method for calibrating an industrial robot in order to determine an actual position of a work tool, in this case a welding gun, in a coordinate system of the industrial robot, or to determine an actual position of a workpiece in the coordinate system of the industrial robot. The present invention relates to a method for controlling a welding cell in order to determine an actual location of workpieces during operation of the welding cell, and not only during setup, which allows increasing the productivity of the welding cell.

The present invention is not limited to the specific embodiments disclosed in the description for illustrative purposes, but covers all possible modifications and alternatives falling within the scope of the present invention as defined by the claims.

## Claims

1. A welding cell control method, the welding cell comprising:
an industrial robot with a welding gun fixed thereon, the industrial robot being configured to move the welding gun relative to workpieces (16) and between welding spots to be performed on said workpieces (16),
wherein said welding gun comprises movable electrodes (1a, 2a), wherein
each of said electrodes (1a, 2a) is controlled by a corresponding electromechanical actuator (EMA) and
each of said electromechanical actuator (EMA) is independently controllable, and the welding gun comprises force sensors configured for measuring a force on said electrodes (1a, 2a),
**characterized in that** the method includes the following steps:
forming a movement trajectory of a target point (X) of electrodes closure as extending between outer surfaces of the workpieces (16) and through the welding spots, and
forming a movement trajectory of centers of end surfaces of the electrodes (1a, 2a) between at least two consequent welding spots as a sum of a movement trajectory of the welding gun and a movement trajectory of the electrodes (1a, 2a), wherein
the movement trajectory of the welding gun tracks the movement trajectory of the target point (X) of the electrodes closure between said at least two consequent welding spots, wherein the target point (X) of the electrodes closure forms a straight line (20) when projected onto a plane parallel to the surface of at least one of the workpieces (16) along which the welding gun is moved, or a plane tangential (21) to the surface of at least one of the workpieces (16) at one of said welding spots,
wherein the target point (X) of the electrodes closure forms a line (23) following a shape of the surface of at least one of the workpieces (16) when projected onto a plane (22) passing through a normal line relative to the surface of said at least one of the workpieces (16) and through said two consequent welding spots, wherein the movement of the welding gun is stopped when the movement trajectory of the target point (X) of the electrodes closure coincides with the welding spot and so as to ensure that the end surfaces of the electrodes (1a, 2a) are perpendicular to the surfaces of the workpieces (16) before they are compressed at the welding spot,
wherein the electrodes (1a, 2a) comprise at least a first electrode (1a) and a second electrode (2a), and the movement trajectory of the electrodes (1a, 2a) is such that:
when moving from a first welding spot, the electrodes (1a, 2a) are moved in the direction away from the workpieces (16) to a distance allowing the welding gun to move to a second welding spot along said movement trajectory of the welding gun without the electrodes (1a, 2a) contacting the surface of the workpieces (16),
wherein when moving to a second welding spot, the first electrode (1a) starts moving towards the surface of the workpiece before or after stopping the welding gun, the first electrode (1a) contacts the surface of the workpiece after stopping the welding gun and its movement is stopped while maintaining an obtained position, wherein said contact is determined based on a change in data from the force sensor of the first electrode (1a), wherein
when moving to the second welding spot, the second electrode (2a) starts moving in the direction towards the workpiece before or after stopping the first electrode (1a), the second electrode (2a) contacts a surface of the workpiece (16) and its movement is continued until a targeted compression force of the workpieces (16) is gained by the first and second electrodes (1a, 2a), wherein said contact is determined based on the change in data from the force sensor of the second electrode (2a), and targeted compression force gain is determined based on the data from the force sensors of both said electrodes (1a, 2a);
after the second welding spot is welded, the welding gun starts moving to the next welding spot after said electrodes (1a, 2a) start moving in the direction away from the surfaces of the workpieces (16) and before or after stopping said electrodes (1a, 2a).

2. The welding cell control method according to claim 1, in which at least one of the electrodes (1a, 2a) is moved longitudinally along its axis.

3. The welding cell control method according to claim 1, in which arms of the welding gun have a common axis (8a, 12a) about which they perform an angular movement.

4. The welding cell control method according to one or more of the previous claims 1-3, in which the end surface of said second electrode (2a) is positioned at a distance from the target point (X) of the electrodes closure coinciding with the welding spot, said distance being at least equal to a movement value of the second electrode (2a) allowing it to develop a speed sufficient to gain targeted compression force on the workpieces (16) prior to contacting the surface of the workpiece (16).

5. The welding cell control method according to claim 4, in which the second electrode (2a) is positioned to said distance before the welding gun is stopped.

6. The welding cell control method according to one or more of the previous claims, in which:
the first electrode (1a) is an electrode mounted on a welding gun arm having the greater rigidity of two welding gun arms, and
the target point (X) of the electrodes closure lies on a line normal to the center of the end surface of the second electrode (2a) mounted on the welding gun arm having the lesser rigidity of the two welding gun arms, wherein
the distance from the end surface of said second electrode to the target point (X) of the electrodes closure does not exceed an operational stroke of the EMA of said second electrode (2a), taking into account at least one of the following parameters: a thickness of the workpieces (16) to be welded, an accuracy tolerance for said thickness, a gap between the workpieces (16), a location accuracy for the workpieces (16), the rigidity of the welding gun and a degree of wear of a cap of said second electrode (2a).

7. The welding cell control method according to one or more of the previous claims, in which:
The target point (X) of the electrodes closure lies on a circumference formed by a rotation of a point coinciding with the center of the end surface of one of the electrodes (1a, 2a) about said common axis, wherein
the target point (X) of the electrodes closure is equidistant from the end surfaces of the electrodes (1a, 2a) along said circumference, and
after the second electrode (2a) contacts the surface of the workpieces (16), the obtained position of the first electrode (1a) is no longer maintained and said first electrode (1a) is further moved towards the surface of the workpiece (16) to perform a uniform gain of targeted compression force on the workpieces (16) by said both electrodes (1a, 2a).

8. The welding cell control method according to any one of claims 1-7, in which the movement trajectory of the target point (X) of the electrodes closure is further formed so that it is arranged between the outer surfaces of the workpieces (16) and is equidistant from them.

9. The welding cell control method according to any one of claims 1-8, in which the movement of the first electrode (1a) towards the workpiece (16) is started before stopping the welding gun, wherein the movement start moment of the first electrode (1a) is determined such that the welding gun is stopped before the first electrode (1a) contacts the surface of the workpiece (16).

10. The welding cell control method according to any one of claims 1-9, in which the movement of the second electrode (2a) towards the workpiece (16) is started before the first electrode (1a) contacts the surface of the workpiece (16) and such that the welding gun is stopped before the first electrode (1a) contacts the workpiece (16) and the first electrode (1a) contacts the surface of the workpiece (16) before the second electrode (2a) contacts the workpiece (16).

11. The welding cell control method according to any one of claims 1-10, in which the movement of the welding gun in the direction of the next welding spot starts after withdrawing the electrodes (1a, 2a) from the surfaces of the workpieces (16) and until said electrodes (1a, 2a) are fully opened.

12. The welding cell control method according to any one of claims 1-11, in which the withdrawal of the electrodes (1a, 2a) from the surfaces of the workpieces (16) is determined based on the change in the data from the force sensors of said electrodes (1a, 2a).

13. The welding cell control method according to one or more of the previous claims, in which said force sensors are installed in said EMA.

14. The welding cell control method according to any one of claims 1-13, in which the movement of the welding gun and the movement of the electrodes (1a, 2a) are controlled using a controller of the welding gun.

15. The welding cell control method according to claims any one of 1-13, wherein the movement of the welding gun is controlled using the controller of the industrial robot and the movement of the electrodes (1a, 2a) is controlled using an electrode control system in communication with the controller of the industrial robot.

16. The welding cell control method according to any one of claims 1-15, in which:
before or after the welding gun is stopped, such distance between the end surfaces of the electrodes (1a, 2a) and the target point (X) of the electrodes closure is provided, that the end surfaces of the electrodes (1a, 2a) do not contact the surfaces of the workpieces (16),
after which
the electrodes (1a, 2a) are moved until they contact the surface of the workpieces (16), determined by changes in the data from the force sensors, wherein
at the moment when the electrodes (1a, 2a) contact the surface of the workpieces (16), an actual position of contact points between the electrodes (1a, 2a) and the surfaces of the workpieces (16) is determined based on positions of the electrodes (1a, 2a),
after determining the actual position of the workpiece (16) in a tooling for welding of at least two previous welding spots the actual position of the workpieces (16) in the tooling is calculated, a position of the welding gun relative to the workpieces (16) and coordinates of the electrodes (1a, 2a) speed reduction points for subsequent welding spots are adjusted, wherein
an adjusted position includes moving the welding gun such as to ensure perpendicularity of the normal line drawn between the centers of the end surfaces of the electrodes (1a, 2a) to the surfaces of the workpieces (16) at each welding spot located on the movement trajectory of the target point (X) of the electrodes closure.

17. A method of a welding cell setup controlled according to the method of any one of claims 1-16, the method including forming the movement trajectory of the target point (X) of electrodes closure using a 3-dimensional computer model of the workpieces to be welded.

18. A method of a welding cell setup controlled according to the method of any one of claims 1-16, the method including the following steps for forming the movement trajectory of the target point (X) of the electrodes closure:
a welding gun controlled by an operator is positioned into a vicinity of a welding spot without contact between the electrodes (1a, 2a) and the workpieces (16), ensuring perpendicularity of a normal line of end surfaces of the electrodes (1a, 2a) to surfaces of the workpieces (16) at an intended contact point, after which
in automatic mode, the electrodes (1a, 2a) are made to contact the surface of the workpieces (16) by moving the electrodes (1a, 2a) by means of the corresponding electromechanical actuators (EMA), wherein said contact is determined based on changes in data from force sensors, a position of the workpieces (16) in space is determined and a position of the target point (X) of the electrodes closure is calculated, after which the operator sets a value of movement of the electrodes (1a, 2a) in the direction away from the workpieces (16) to open the electrodes (1a, 2a) such as to move the welding gun to the next welding spot without the electrodes contacting the surface of the workpieces (16), after which
the operator moves the welding gun to the next welding point.

19. The method of the welding cell setup according to claim 18, in which, after calculating the position of the target point (X) of the electrodes closure, the electrodes (1a, 2a) are moved so that a distance from their end surface to the target point (X) of the electrodes closure does not exceed an operational stroke of the EMA of the specified electrodes (1a, 2a), taking into account at least one of the following parameters: a thickness of the workpieces (16) to be welded, an accuracy tolerance for said thickness, a gap between the workpieces (16), a location accuracy of the workpieces (16), a rigidity of the welding gun and a degree of wear of caps of said electrodes (la, 2a).
